# EUROPEAN PATENT SPECIFICATION

(11) **EP 3 107 345 B1**
(45) Date of publication and mention of the grant of the patent: **30.10.2019**
(21) Application number: 14884853.4
(22) Date of filing: 05.03.2014
(51) Int. Cl.: H04W 72/04, H04W 84/12

(54) **CHANNEL RESOURCE INDICATION METHOD AND DEVICE**
KANALRESSOURCENANZEIGEVERFAHREN UND VORRICHTUNG
PROCÉDÉ ET DISPOSITIF D'INDICATION DE RESSOURCES DE CANAL

(43) Date of publication of application: 21.12.2016
(73) Proprietor: Huawei Device Co., Ltd., Dongguan, Guangdong 523808 (CN)
(72) Inventor: LU, Su, Shenzhen Guangdong 518129 (CN); DING, Zhiming, Shenzhen Guangdong 518129 (CN); SHU, Guiming, Shenzhen Guangdong 518129 (CN); DU, Zhenguo, Shenzhen Guangdong 518129 (CN)
(74) Representative: Epping - Hermann - Fischer
(86) International application number: PCT/CN2014/072932
(87) International publication number: WO 2015/131358

(56) References cited:
- CN-A- 1 627 844
- CN-A- 101 114 868
- CN-A- 102 124 806
- US-A1- 2012 170 534
- "IEEE Standard for Information technology--Telecommunications and information exchange between systems Local and metropolitan area networks--Specific requirements Part 11: Wireless LAN Medium Access Control (MAC) and Physical Layer (PHY) Specifications;IEEE Std 802.11-2012 (Revision of IEEE Std 802.1", IEEE STANDARD, IEEE, PISCATAWAY, NJ, USA, 29 March 2012 (2012-03-29), pages 1-2793, XP068050195, ISBN: 978-0-7381-7211-8

## Description

### TECHNICAL FIELD

Embodiments of the present invention relate to the field of communications technologies, and in particular, to a method and an apparatus for indicating a channel resource.

### BACKGROUND

In an IEEE802.11 wireless local access network (Wireless local access network, hereinafter referred to as WLAN), multiple stations (station, hereinafter referred to as STA) in a same basic service set (Basic Service Set, referred to as BSS) share a same spectrum resource. At present, a mechanism, specified by the standard, for a STA to send data to an access point (Access Point, hereinafter referred to as AP) is: multiple STAs share one channel, and the multiple STAs separately occupy the entire channel within a period of time by using a competitive mechanism, so as to send data to an AP. With the popularity of Wi-Fi (Wireless Fidelity) devices, a quantity of STAs becomes larger, and therefore channel resources are increasingly strained. When multiple STAs send request to send frames (Request To Send, hereinafter referred to as RTS) at the same time, each STA sends an RTS frame according to a principle of requesting channel resources as many as possible, for example, multiple STAs each request a channel of 80MHz, where the channel of 80MHz consists of four channels of 20MHz, and therefore, each STA of the multiple STAs parallelly sends, on the foregoing four channels of 20MHz, four RTS frames with same content to request channel resources. When at least two messages collide, at least two STAs are caused to fail to send RTS frames. A channel with a bandwidth of 20MHz is a minimum channel unit of a WLAN using an orthogonal frequency division multiplexing (Orthogonal Frequency Division Multiplexing, referred to as OFDM) technology.

To reduce a probability of collision between messages, in the prior art, multiple STAs are required to parallelly send RTS frames by using only minimum channel units. After receiving the RTS frames parallelly sent by the multiple STAs, an AP sends a clear to send frame (Clear To Send, referred to as CTS) to each STA according to a predefined rule. The predefined rule is: an AP replies, on a channel on which a STA sends one or more RTS frames, with a CTS frame, or an AP replies, on a channel on which a STA sends some RTS frames, with a CTS frame, and a STA receiving the CTS frame sends uplink data to the AP.

However, according to the foregoing predefined rule, the channel that is used by the AP to reply to the STA with the CTS frame is also a minimum channel unit; therefore, channel utilization is quite low.

US 2012/0170534 A1 relates to a method for a station to acquire information on an available channel for operation in a white space band. The method comprises transmitting an available channel information request message to a device having database information; receiving an available channel information response message from the device having database information, the available channel information response message comprising (a) identification information on an available channel and (b) information on valid time of the available channel; and communicating a signal on the available channel during the valid time using the information of (a) and (b).

### SUMMARY

Embodiments of the present invention are defined by the claims. A method and an apparatus for indicating a channel resource are provided, to improve channel utilization.

According to an aspect, a station indicates, in a request message, to an access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a method for indicating a channel resource according to the present invention;
FIG. 2 is a first schematic structural diagram of channel information included in a confirmation message in Embodiment 1 of the method for indicating a channel resource according to the present invention;
FIG. 3 is a second schematic structural diagram of the channel information included in the confirmation message in Embodiment 1 of the method for indicating a channel resource according to the present invention;
FIG. 4 is a flowchart of Embodiment 2 of a method for indicating a channel resource according to the present invention;
FIG. 5 is a schematic diagram of a data transmission process in Embodiment 3 of a method for indicating a channel resource according to the present invention;
FIG. 6 is a schematic structural diagram of Embodiment 1 of an access point according to the present invention;
FIG. 7 is a schematic structural diagram of Embodiment 1 of a station according to the present invention;
FIG. 8 is a schematic structural diagram of Embodiment 2 of an access point according to the present invention; and
FIG. 9 is a schematic structural diagram of Embodiment 2 of a station according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention.

Specifically, with the popularity of Wi-Fi devices, a quantity of STAs becomes larger. In a scenario in which stations are densely distributed, multiple STAs need to send channel requests at the same time, and to reduce a probability of collision, a STA requesting a channel is required to send a channel request by using only a minimum channel unit. An AP determines, according to a request message sent by a station, whether to reply to the station with a confirmation message. To improve channel utilization, the embodiments of the present invention provide a method and an apparatus for indicating a channel resource, so that after an access point allocates a channel resource to all stations in a centralized manner according to the channel resource and types of stations in a same BSS, the access point may send a confirmation message to a station, to instruct the access point and the station to communicate on an indicated channel resource, thereby improving channel utilization.

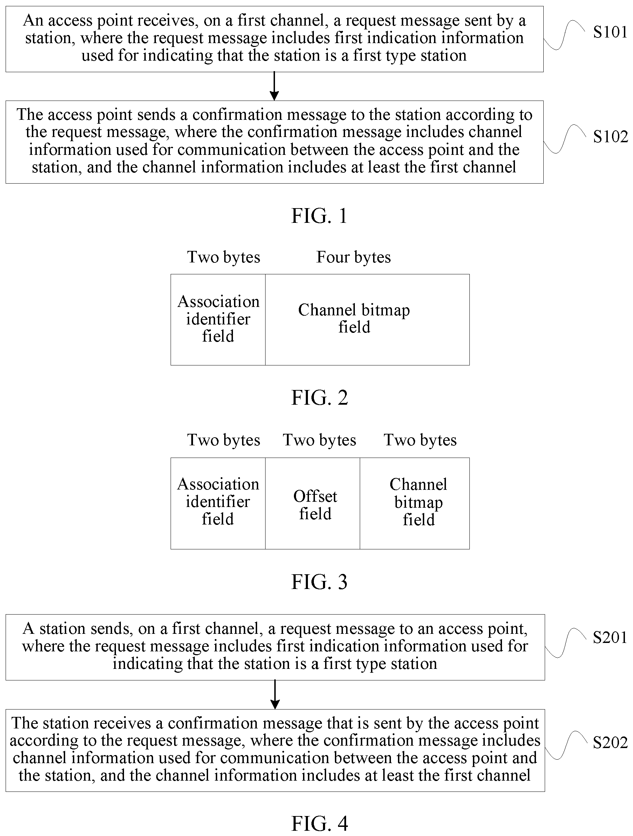

FIG. 1 is a flowchart of Embodiment 1 of a method for indicating a channel resource according to the present invention. This embodiment is described by using an example in which an access point is used as an execution body. As shown in FIG. 1, the method in this embodiment may include:
S101: An access point receives, on a first channel, a request message sent by a station, where the request message includes first indication information used for indicating that the station is a first type station, the first type station is a station supporting channel information indicated by the access point, and the first channel is a minimum channel unit.
S102: The access point sends a confirmation message to the station according to the request message, where the confirmation message includes channel information used for communication between the access point and the station, and the channel information includes at least the first channel.

Specifically, the station selects a minimum channel unit to send the request message, and the access point receives, on the first channel, the request message sent by the station, where the first channel is a minimum channel unit. As a possible implementation manner, the request message includes the first indication information used for indicating that the station is the first type station, and the first type station is a station supporting channel information indicated by the access point. After receiving the request message, the access point sends the confirmation message to the station according to the request message, where the access point may send, on a channel included in the channel information, the confirmation message to the station according to the request message, where the confirmation message includes the channel information used for communication between the access point and the station, and the channel information includes at least the first channel. Specifically, for example, the channel information includes a channel bitmap and an association identifier that is allocated by the access point to the station, and the channel bitmap indicates, according to bits, at least one channel used by the station to send data. That the confirmation message includes the channel information used for communication between the access point and the station may be specifically: storing the association identifier in a first field that occupies two bytes and is in the confirmation message, and storing the channel bitmap in a second field that occupies four bytes and is in the confirmation message. By using FIG. 2 as an example, FIG. 2 is a first schematic structural diagram of the channel information included in the confirmation message in Embodiment 1 of the method for indicating a channel resource according to the present invention. As shown in FIG. 2, an original receiving address field (RA field) of six bytes in the confirmation message is given a new function in this embodiment of the present invention, and is specifically divided into two parts: an association identifier (Association Identifier, referred to as AID) field of two bytes and a channel bitmap (channel bitmap) field of four bytes, where names and a sequence of the two fields represented by the two parts are not limited to names and a sequence shown in FIG. 2. The association identifier is an identifier of 16 bits that is allocated by an AP to a STA when the STA is associated with the AP. The channel bitmap indicates, according to bits, that a STA sends data on which channel or on which channels. For example, when the channel bitmap is "0010-0011", it represents that the STA can use three channels, which are a channel 0, a channel 1, and a channel 5. A channel bitmap of 32 bits may indicate 32 channels. Assuming that a channel of 20MHz is a minimum channel unit, a channel bitmap of 16 bits may indicate a channel with a greatest width of 320MHz.

According to the method for indicating a channel resource provided in this embodiment, a station indicates, in a request message, to an access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

Further, based on the embodiment shown in FIG. 1, when the request message includes second indication information used for indicating that the station is a second type station, the second type station supports channel information indicated by the access point and the channel information carries offset information, where the offset information is used for indicating a time that the station needs to wait after receiving a confirmation message. For example, the offset information is used for indicating how long the STA needs to wait to send data after receiving the confirmation message from the AP. When no offset is carried or a carried offset is zero, the STA immediately sends the data after receiving the confirmation message from the AP. The immediate sending may refer to sending the data after a short interframe space (Short Interframe Space, referred to as SIFS). In this case, after receiving the request message, the access point sends the confirmation message to the station according to the request message, where the confirmation message includes channel information used for communication between the access point and the station, and the channel information carries the offset information. Specifically, for example, the channel information includes the offset information, a channel bitmap, and an association identifier that is allocated by the access point to the station, and the channel bitmap indicates, according to bits, at least one channel used by the station to send data. That the confirmation message includes the channel information used for communication between the access point and the station may be specifically: storing the association identifier in a third field that occupies two bytes and is in the confirmation message; storing the channel bitmap in a fourth field that occupies two bytes and is in the confirmation message; and storing the offset information in a fifth field that occupies two bytes and is in the confirmation message. By using FIG. 3 as an example, FIG. 3 is a second schematic structural diagram of the channel information included in the confirmation message in Embodiment 1 of the method for indicating a channel resource according to the present invention. As shown in FIG. 3, an original RA field of six bytes in the confirmation message is divided into three parts in this embodiment of the present invention: an association identifier field of two bytes, an offset (offset) field of two bytes, and a channel bitmap field (channel bitmap) of two bytes, where names and a sequence of the three fields represented by the three parts are not limited to names and a sequence shown in FIG. 3. The offset information indicates that the STA needs to wait, after receiving the confirmation message, a time whose length is equal to a value of an Offset, to send the data. A time granularity in the Offset is not limited in the present invention. An offset of 16 bits may indicate a length of 65535 time units at most.

In the foregoing embodiment, specifically, a sending address field of the request message may include the first indication information or the second indication information. That is, the STA indicates, in the request message sent to the access point, that the STA supports channel information indicated by the access point. In an implementation manner, the STA may indicate, by using a bit in the sending address field of the request message, that the station supports channel information indicated by the access point, where this bit may be referred to as a resource indication bit, and is similar to a multicast/unicast bit (a bit 0 of the first byte of a Media Access Control (Media Access Control, hereinafter referred to as MAC) address of six bytes); and a bit 1 of the first byte in the MAC address of the sending address field is used to indicate a global/local address (Global/Local address). In this embodiment of the present invention, global/local bits of both a conventional station and a station that supports a bandwidth indication are set to 0, and a global/local bit of a station supporting channel information indicated by an access point is set to 1. When a bit 1 (a global/local bit) is 1, a bit 0 (a multicast/unicast bit) may be further used to distinguish whether channel information carries offset information. Different values of a bit 1 and a bit 0 in an address of the sending address field may indicate four different types of stations, which are separately: a conventional station, a station supporting a bandwidth indication (Bandwidth Signaling), a station supporting channel information indicated by an access point, and a station supporting channel information that is indicated by an access point and carries offset information. Herein, in a case, the first indication information may be that: the bit 1 and the bit 0 are respectively "1" and "0", and the second indication information may be that: the bit 1 and the bit 0 are respectively "1" and "1", which may also be construed as another case, for example, when the bit 1 is 1, the first indication information may indicate that the station supports the channel information indicated by the access point; and the second indication information may be based on the first indication information (that is, on the premise that the bit 1 is 1), and further, when the bit 0 is 1, the second indication information indicates that the station supports the channel information indicated by the access point, and the supported channel information indicated by the access point carries the offset information. The second indication information may be construed to be used in combination with the first indication information when the bit 0 is 1, which may also be construed as that the bit 1 and the bit 0 are respectively "1" and "1". In this case, the second indication information may include the first indication information, or may be construed differently, which is not limited in the present invention. Definitions of the foregoing descriptions may be shown in the following table 1:

**Table 1**

| bit 1 | bit 0 | Indication |
|---|---|---|
| 0 | 0 | Indicate a conventional station. |
| 0 | 1 | Indicate a station supporting a bandwidth indication |
| 1 | 0 | Indicate a station supporting channel information indicated by an access point |
| 1 | 1 | Indicate a station supporting channel information indicated by an access point, where the channel information carries offset information |

After an AP receives a request message from a STA, if the AP agrees to the request and is to respond to the STA, the AP first determines a type of the station, where the type is indicated by indication information in the received request message. If it indicates that the station is a conventional station, the AP copies content in a sending address field in the request message of the STA to a receiving address field (Receiving Address, hereinafter referred to as RA) of a confirmation message. If it indicates that the station is a station supporting a bandwidth indication, the AP copies content of a sending address field in the request message of the STA to an RA of a confirmation message, and zeros out a multicast/unicast bit thereof. If it indicates that the station is a station supporting channel information indicated by an access point, the AP constructs channel information according to a structure shown in FIG. 2. As shown in FIG. 2, an original RA field of six bytes is divided into two parts: an association identifier field (Association Identifier, referred to as AID) of two bytes and a channel bitmap field (channel bitmap) of four bytes. An association identifier is an identifier of 16 bits that is allocated by an AP to a STA when the STA is associated with the AP. A channel bitmap indicates, according to bits, that a STA sends data on which channel or on which channels. For example, when the channel bitmap is "0010-0011", it represents that the STA can use three channels, which are a channel 0, a channel 1, and a channel 5. A channel bitmap of 32 bits may indicate 32 channels. Assuming that a channel of 20MHz is a minimum channel unit, a channel bitmap of 16 bits may indicate a channel with a greatest width of 320MHz. Finally, the AP sends a confirmation message including the channel information to the station. If it indicates that the station is a station supporting channel information indicated by an access point, where the channel information carries offset information, the AP constructs channel information according to a structure shown in FIG. 3. As shown in FIG. 3, an original RA field of six bytes is divided into three parts: an association identifier field of two bytes, an offset field (offset) of two bytes, and a channel bitmap field (channel bitmap) of two bytes. The offset information indicates that the STA needs to wait, after receiving a confirmation message, a time whose length is equal to a value of an Offset, to send data. A time granularity in the Offset is not limited in the present invention. An offset of 16 bits may indicate a length of 65535 time units at most. Finally, the AP sends the confirmation message including the channel information to the station.

There are two kinds of request messages and confirmation messages in the foregoing embodiment. In a first case, the request message is a request to send message (RTS frame), and the confirmation message is a clear to send message (CTS frame).

In a second case, the request message is a block acknowledgement request message (Block Ack Request), and the confirmation message is a block acknowledgement confirmation message (Ack).

In the second case, the request message is a block acknowledgement request message, where the block acknowledgement request message includes indication information used for indicating that an access point receiving the block acknowledgement request message does not need to immediately reply to a block acknowledgement. For example, after the STA sends uplink data, the STA sends a block acknowledgement request message to the AP, and after the AP receives the block acknowledgement request message, the method further includes:
sending, by the access point, a block acknowledgement confirmation message to the station that sends the block acknowledgement request message, where the block acknowledgement confirmation message includes at least one used transmit channel and a time at which the block acknowledgement message (Block Ack) to be sent by the access point sending the block acknowledgement confirmation message arrives, so that the station that receives the block acknowledgement confirmation message receives, on the at least one used transmit channel according to a time for sending the block acknowledgement message, the block acknowledgement message sent by the access point sending the block acknowledgement confirmation message. Specifically, for example, a duration (Duration) field of the block acknowledgement confirmation message includes the time at which the block acknowledgement message to be sent by the access point sending the block acknowledgement confirmation message arrives, and a receiving address field of the block acknowledgement confirmation message includes at least one transmit sub-channel that is used, by the access point sending the block acknowledgement confirmation message, to send the block acknowledgement message. Further, the block acknowledgement request message further includes information used for indicating an offset supported by the access point.

It should be noted that, the method for indicating a channel resource provided in this embodiment of the present invention is not only applicable to the foregoing RTS/CTS interaction process and an interaction process of the block acknowledgement request message and the block acknowledgement confirmation message, but also applicable to an interaction process of other request/response control messages.

In the foregoing two implementable manners, further, the request message may further include channel information requested by the station, and a quantity of channels in the channel information used for communication between the access point and the station may be not greater than a quantity of channels in the channel information requested by the station.

Specifically, a receiving address field of the request message may include the channel information requested by the station. For example, being similar to the structure shown in FIG. 2, an association identifier field of the request message stores a short network identifier (Partial BSS ID, referred to as PBSSID). A channel bitmap field stores the channel information requested by the STA. To indicate to a receiving party whether an RA field of the request message carries a complete network identifier or carries a short network identifier, the STA may use one bit in a preamble signal (Signal, hereinafter referred to as SIG) field of the request message for indication, or the STA uses one reserved bit in a frame control (Frame Control) field of a MAC part of the request message for indication. After receiving the request message, the AP first detects whether the RA field of the request message carries a complete network identifier (BSSID) or carries a short network identifier (PBSSID). If a short network identifier is carried, the AP extracts information about a channel bitmap in the RA field. The AP sets, according to a channel status currently detected by the AP, a new channel bitmap in the RA field in the confirmation message with which the AP replies to a request of the STA, where a quantity of channels indicated by the new channel bitmap is less than or equal to a quantity of channels indicated by the channel bitmap in the RA field in the request message. If the access point sends the confirmation message, a bit, corresponding to a channel on which the STA sends the request message, in the channel bitmap must be set to 1.

According to the method for indicating a channel resource provided in this embodiment, a station indicates, in a request message, to an access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

FIG. 4 is a flowchart of Embodiment 2 of a method for indicating a channel resource according to the present invention. This embodiment is described by using an example in which a station is used as an execution body. As shown in FIG. 4, the method in this embodiment may include:
S201: A station sends, on a first channel, a request message to an access point, where the request message includes first indication information used for indicating that the station is a first type station, the first type station is a station supporting channel information indicated by the access point, and the first channel is a minimum channel unit.
S202: The station receives a confirmation message that is sent by the access point according to the request message, where the confirmation message includes channel information used for communication between the access point and the station, and the channel information includes at least the first channel.

Specifically, the station selects a minimum channel unit to send the request message, where the first channel is a minimum channel unit, and that the station receives the confirmation message that is sent by the access point according to the request message may also be:
receiving, by the station, the confirmation message that is sent on a channel by the access point according to the request message, where the channel is included in the channel information.

The request message includes the first indication information used for indicating that the station is the first type station, and the first type station is a station supporting channel information indicated by the access point. After receiving the request message, the access point sends the confirmation message to the station according to the request message, and the station receives the confirmation message, where the confirmation message includes the channel information used for communication between the access point and the station, and the channel information includes at least the first channel. Specifically, for example, the channel information includes a channel bitmap and an association identifier that is allocated by the access point to the station, and the channel bitmap indicates, according to bits, at least one channel used by the station to send data. That the confirmation message includes the channel information used for communication between the access point and the station may be specifically: storing the association identifier in a first field that occupies two bytes and is in the confirmation message, and storing the channel bitmap in a second field that occupies four bytes and is in the confirmation message.

According to the method for indicating a channel resource provided in this embodiment, a station indicates, in a request message, to an access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

Further, based on the embodiment shown in FIG. 4, when the request message includes second indication information used for indicating that the station is a second type station, the second type station supports channel information indicated by the access point and the channel information carries offset information, where the offset information is used for indicating a time that the station needs to wait after receiving a confirmation message. For example, the offset information is used for indicating how long the STA needs to wait to send data after receiving the confirmation message from AP. When no offset is carried or a carried offset is zero, the STA immediately sends the data after receiving the confirmation message from the AP. In this case, after receiving the request message, the access point sends the confirmation message to the station according to the request message, where the confirmation message includes channel information used for communication between the access point and the station, and the channel information carries the offset information. Specifically, for example, the channel information includes a channel bitmap and an association identifier that is allocated by the access point to the station, and the channel bitmap indicates, according to bits, at least one channel used by the station to send data. That the confirmation message includes the channel information used for communication between the access point and the station may be specifically: storing the association identifier in a third field that occupies two bytes and is in the confirmation message; storing the channel bitmap in a fourth field that occupies two bytes and is in the confirmation message; and storing the offset information in a fifth field that occupies two bytes and is in the confirmation message. The "first", "second", and the like in this embodiment of the present invention are used for only distinguishing, but have no other particular meanings. The third field and the first field may be construed to correspond to a same field in the confirmation message, and do not represent different fields in the confirmation message because a difference in terms of the "third" and "first". Different terms may represent a same meaning, or different meanings, and are construed according to specific actual situations.

In the foregoing embodiment, further, a sending address field of the request message includes the first indication information or the second indication information.

There are two kinds of request messages and confirmation messages in the foregoing embodiment:
In a first case, the request message is a request to send message (RTS frame), and the confirmation message is a clear to send message (CTS frame).

In a second case, the request message is a block acknowledgement request message, and the confirmation message is a block acknowledgement confirmation message.

In the second case, the request message is a block acknowledgement request message, where the block acknowledgement request message includes indication information used for indicating that an access point receiving the block acknowledgement request message does not need to immediately reply to a block acknowledgement. For example, after the STA sends uplink data, the STA sends a block acknowledgement request message to the AP, and after the AP receives the block acknowledgement request message, the method further includes:
sending, by the access point, a block acknowledgement confirmation message to the station that sends the block acknowledgement request message, where the block acknowledgement confirmation message includes at least one used transmit channel and a time at which the block acknowledgement message to be sent by the access point sending the block acknowledgement confirmation message arrives, so that the station that receives the block acknowledgement confirmation message receives, on the at least one used transmit channel according to a time for sending the block acknowledgement message, the block acknowledgement message sent by the access point sending the block acknowledgement confirmation message. Specifically, for example, a duration field of the block acknowledgement confirmation message includes the time at which the block acknowledgement message to be sent by the access point sending the block acknowledgement confirmation message arrives, and a receiving address field of the block acknowledgement confirmation message includes at least one transmit sub-channel that is used, by the access point sending the block acknowledgement confirmation message, to send the block acknowledgement message.

Further, the block acknowledgement request message further includes information used for indicating an offset supported by the access point.

It should be noted that, the method for indicating a channel resource provided in this embodiment of the present invention is not only applicable to the foregoing RTS/CTS interaction process and an interaction process of the block acknowledgement request message and the block acknowledgement confirmation message, but also applicable to an interaction process of other request/response control messages.

In the foregoing two implementable manners, further, the request message further includes channel information requested by the station, and a quantity of channels in the channel information used for communication between the access point and the station is not greater than a quantity of channels in the channel information requested by the station.

Specifically, a receiving address field of the request message may include the channel information requested by the station. For example, being similar to a structure shown in FIG. 2, an association identifier field of the request message stores a short network identifier (PBSSID). A channel bitmap field stores the channel information requested by the STA. To indicate to a receiving party whether an RA field of the request message carries a complete network identifier or carries a short network identifier, the STA may use one bit in a preamble SIG field of the request message for indication, or the STA uses one reserved bit in a frame control (Frame Control) field of a MAC part of the request message for indication. After receiving the request message, the AP first detects whether the RA field of the request message carries a complete network identifier or carries a short network identifier. If a short network identifier is carried, the AP extracts information about a channel bitmap in the RA field. The AP sets, according to a channel status currently detected by the AP, a new channel bitmap in the RA field in the confirmation message with which the AP replies to a request of the STA, where a quantity of channels indicated by the new channel bitmap is less than or equal to a quantity of channels indicated by the channel bitmap in the RA field in the request message. If the confirmation message is sent, a bit, corresponding to a channel on which the STA sends the request message, in the channel bitmap must be set to 1.

According to the method for indicating a channel resource provided in this embodiment, a station indicates, in a request message, to an access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

The technical solution in the method embodiment shown above is described in detail in the following by using a specific embodiment.

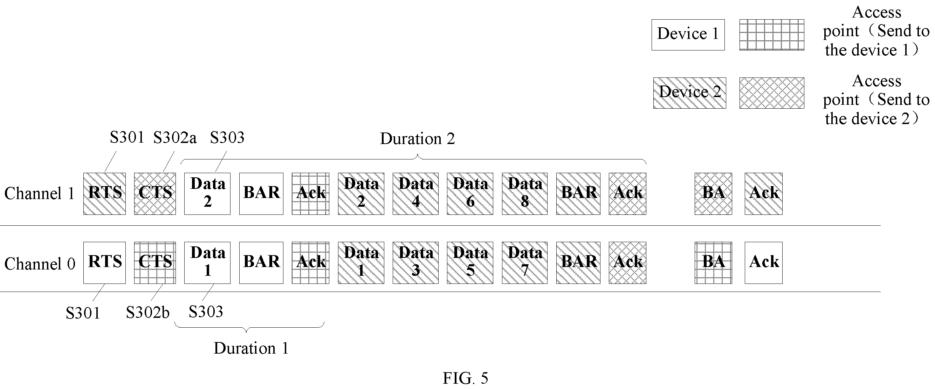

A complete transmission process is used as an example, and that a request message is an RTS message and a confirmation message is a CTS message is used as an example. FIG. 5 is a schematic diagram of a data transmission process in Embodiment 3 of a method for indicating a channel resource according to the present invention. As shown in FIG. 5, first,
S301: A device 1 and a device 2 send, respectively on a channel 0 and a channel 1, an RTS message to an AP. The RTS message sent by the device 1 carries a first indication message, to indicate that the device 1 supports channel information indicated by the access point; and the RTS message sent by the device 2 carries a second indication message, to indicate that the device 2 supports channel information indicated by the access point and the channel information carries offset information.
S302a: After receiving the RTS message, the AP replies, on the channel 0, to the device 1 with a CTS message. Because the device 1 does not support that channel information carries offset information, the CTS message with which the AP replies includes only an association identifier (for example, 0x03) of the device 1. For a value of 0x03, only the last two bits are 1, which indicates that the channel 0 and the channel 1 can be used. A duration field (Duration) in the CTS message that is sent by the AP to the device 1 indicates a duration 1 of a transmit opportunity obtained by the device 1.
S302b: The AP replies, on the channel 1, to the device 2 with a CTS message. Because the device 2 supports that channel information carries offset information, that is, the device 2 agrees that the AP requires, according to a need, the device to access the channel after a delay for a period of time, the CTS message from the AP includes an association identifier (0x03) of the device 2 and offset information (where an offset length is the duration 1). A duration field (Duration) in the CTS message that is sent by the AP to the device 2 carries a duration 2 of a transmit opportunity obtained by the device 2.
S303: After receiving the CTS messages, the device 1 and the device 2 send data according to the CTS messages.
S304: After completing sending data, the device 1 sends a block acknowledgement request (Block Acknowledge Request, hereinafter referred to as BAR) message to the AP. The BAR message may be sent independently on the channel 0, or may be sent on the channel 0 and the channel 1 at the same time. In the figure, the device 1 sends the BAR message on the channel 0 and the channel 1 at the same time. A BAR acknowledgement policy (BAR Ack Policy) in the BAR message indicates that a party sending a block acknowledgement message (Block Acknowledgement, hereinafter referred to as BA) does not need to immediately reply with a BA. Optionally, the BAR may indicate that the device 1 supports that channel information carries offset information or may indicate that the device 1 does not support that channel information carries offset information.
S305: After receiving the BAR message from the device 1, the AP does not immediately reply with a BA, but needs to immediately reply with an Ack message. The AP selects, according to a channel status, to send the Ack message independently on the channel 0 or on the channel 0 and the channel 1 at the same time. An RA field of the Ack message carries indication information, and a Duration field of the Ack message carries information about a time at which the BA arrives. If indication information in the BAR message received by the AP indicates that the device 1 supports that channel information carries an offset, an offset field in the Ack message may also be used to indicate the time at which the BA arrives. A channel bitmap field of the Ack message indicates that the AP sends the BA on which channel or on which channels. The AP sends the BA on only a channel indicated by the Ack message.
S306: After receiving the CTS message with which the AP replies, the device 2 waits a time that is equal to a value of an offset, and then accesses the channel. Being different from that the device 1 immediately sends the data, the device 2 needs to detect the channel again after waiting the time that is equal to the value of the offset, and if the channel is idle, the device 2 immediately sends data; or if the channel is not idle, the device 2 discards data sending. In this way, an unexpected interference station is avoided. After sending the data, according to the foregoing rule, the device 2 sends a BAR, receives an Ack, and then receives a BA.

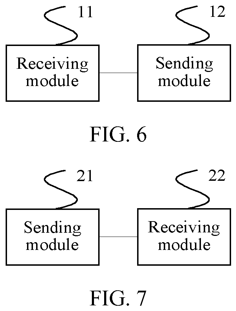

FIG. 6 is a schematic structural diagram of Embodiment 1 of an access point according to the present invention. As shown in FIG. 6, the apparatus in this embodiment may include: a receiving module 11 and a sending module 12. The receiving module 11 is configured to receive, on a first channel, a request message sent by a station, where the request message includes first indication information used for indicating that the station is a first type station, the first type station is a station supporting channel information indicated by the access point, and the first channel is a minimum channel unit. The sending module 12 is configured to send a confirmation message to the station according to the request message, where the confirmation message includes channel information used for communication between the access point and the station, and the channel information includes at least the first channel.

Further, that the sending module 12 sends the confirmation message to the station according to the request message may be:
sending, by the sending module 12, on a channel included in the channel information, the confirmation message to the station according to the request message.

The channel information includes a channel bitmap and an association identifier that is allocated by the access point to the station, and the channel bitmap indicates, according to bits, at least one channel used by the station to send data. That the confirmation message includes the channel information used for communication between the access point and the station may be specifically:
storing the association identifier in a first field that occupies two bytes and is in the confirmation message, and storing the channel bitmap in a second field that occupies four bytes and is in the confirmation message.

Based on the embodiment shown in FIG. 6, the request message may also be second indication information used for indicating that the station is a second type station, where the second type station supports channel information indicated by the access point and the channel information carries offset information, and the offset information is used for indicating a time that the station needs to wait after receiving a confirmation message. In this case, the confirmation message includes channel information used for communication between the access point and the station, the channel information carries the offset information, and the channel information includes at least the first channel. The channel information includes the offset information, a channel bitmap, and an association identifier that is allocated by the access point to the station, and the channel bitmap indicates, according to bits, at least one channel used by the station to send data. That the confirmation message includes the channel information used for communication between the access point and the station may be specifically:
storing the association identifier in a third field that occupies two bytes and is in the confirmation message; storing the channel bitmap in a fourth field that occupies two bytes and is in the confirmation message; and storing the offset information in a fifth field that occupies two bytes and is in the confirmation message.

In the foregoing embodiment, a sending address field of the request message includes the first indication information or the second indication information.

Further, the request message further includes channel information requested by the station, and a quantity of channels in the channel information used for communication between the access point and the station is not greater than a quantity of channels in the channel information requested by the station. Specifically, a receiving address field of the request message may include the channel information requested by the station.

There are two kinds of request messages and confirmation messages in the foregoing embodiment:
In a first case, the request message is a request to send message (RTS frame), and the confirmation message is a clear to send message (CTS frame).

In a second case, the request message is a block acknowledgement request message, and the confirmation message is a block acknowledgement confirmation message.

The access point in this embodiment may be configured to execute the technical solution in the method embodiment shown in FIG. 1, and their implementation principles are similar, which are not described herein again.

According to the access point provided in this embodiment, a station indicates, in a request message, to the access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

FIG. 7 is a schematic structural diagram of Embodiment 1 of a station according to the present invention. As shown in FIG. 7, the station in this embodiment may include: a sending module 21 and a receiving module 22. The sending module 21 is configured to send, on a first channel, a request message to an access point, where the request message includes first indication information used for indicating that the station is a first type station, the first type station is a station supporting channel information indicated by the access point, and the first channel is a minimum channel unit. The receiving module 22 is configured to receive a confirmation message that is sent by the access point according to the request message, where the confirmation message includes channel information used for communication between the access point and the station, and the channel information includes at least the first channel.

Further, that the receiving module 22 receives the confirmation message that is sent by the access point according to the request message may be:
receiving, by the receiving module 22, the confirmation message that is sent on a channel by the access point according to the request message, where the channel is included in the channel information.

The channel information includes a channel bitmap and an association identifier that is allocated by the access point to the station, and the channel bitmap indicates, according to bits, at least one channel used by the station to send data. That the confirmation message includes the channel information used for communication between the access point and the station may be specifically:
storing the association identifier in a first field that occupies two bytes and is in the confirmation message, and storing the channel bitmap in a second field that occupies four bytes and is in the confirmation message.

Based on the embodiment shown in FIG. 7, the request message may also be second indication information used for indicating that the station is a second type station, where the second type station supports channel information indicated by the access point and the channel information carries offset information, and the offset information is used for indicating a time that the station needs to wait after receiving a confirmation message. In this case, the confirmation message includes channel information used for communication between the access point and the station, the channel information carries the offset information, and the channel information includes at least the first channel. The channel information includes the offset information, a channel bitmap, and an association identifier that is allocated by the access point to the station, and the channel bitmap indicates, according to bits, at least one channel used by the station to send data. That the confirmation message includes the channel information used for communication between the access point and the station may be specifically:
storing the association identifier in a third field that occupies two bytes and is in the confirmation message; storing the channel bitmap in a fourth field that occupies two bytes and is in the confirmation message; and storing the offset information in a fifth field that occupies two bytes and is in the confirmation message.

In the foregoing embodiment, a sending address field of the request message includes the first indication information or the second indication information.

Further, the request message further includes channel information requested by the station, and a quantity of channels in the channel information used for communication between the access point and the station is not greater than a quantity of channels in the channel information requested by the station. Specifically, a receiving address field of the request message may include the channel information requested by the station.

There are two kinds of request messages and confirmation messages in the foregoing embodiment:
In a first case, the request message is a request to send message (RTS frame), and the confirmation message is a clear to send message (CTS frame).

In a second case, the request message is a block acknowledgement request message, and the confirmation message is a block acknowledgement confirmation message.

The station in this embodiment may be configured to execute the technical solution in the method embodiment shown in FIG. 4, and their implementation principles are similar, which are not described herein again.

According to the station provided in this embodiment, the station indicates, in a request message, to an access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

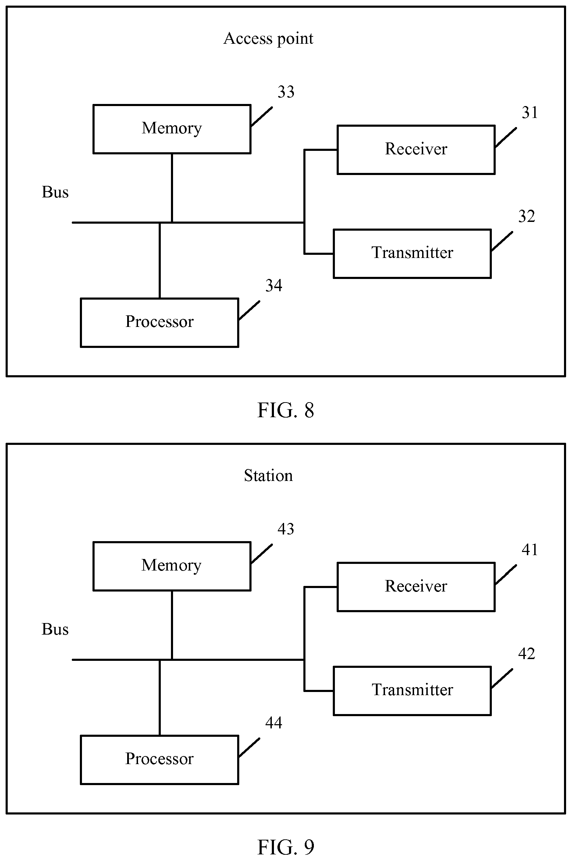

FIG. 8 is a schematic structural diagram of Embodiment 2 of an access point according to the present invention. As shown in FIG. 8, the access point in this embodiment may include: a receiver 31, a transmitter 32, a memory 33, and a processor 34 (where there may be one or more processors 34, and one processor is used as an example in FIG. 8). In this embodiment of the present invention, the receiver 31, the transmitter 32, the memory 33, and the processor 34 may be connected by using a bus or in another manner. In FIG. 8, that the receiver 31, the transmitter 32, the memory 33, and the processor 34 are connected by using a bus is used as an example.

The memory 33 is configured to store program code, and the receiver 31 is configured to receive, on a first channel, a request message sent by a station, where the request message includes first indication information used for indicating that the station is a first type station, the first type station is a station supporting channel information indicated by the access point, and the first channel is a minimum channel unit. The processor 34 is configured to invoke the program code stored in the memory 33 to perform the following step: allocating, according to the request message received by the receiver 31, channel information used for communication between the access point and the station to the station that sends the received request message.

The transmitter 32 is configured to send a confirmation message to the station according to the request message, where the confirmation message includes the channel information used for communication between the access point and the station, and the channel information includes at least the first channel.

Further, that the transmitter 32 sends the confirmation message to the station according to the request message may be:
sending, by the transmitter 32, on a channel included in the channel information, the confirmation message to the station according to the request message.

The channel information includes a channel bitmap and an association identifier that is allocated by the access point to the station, and the channel bitmap indicates, according to bits, at least one channel used by the station to send data. That the confirmation message includes the channel information used for communication between the access point and the station may be specifically:
storing the association identifier in a first field that occupies two bytes and is in the confirmation message, and storing the channel bitmap in a second field that occupies four bytes and is in the confirmation message.

Based on the embodiment shown in FIG. 8, the request message may also be second indication information used for indicating that the station is a second type station, where the second type station supports channel information indicated by the access point and the channel information carries offset information, and the offset information is used for indicating a time that the station needs to wait after receiving a confirmation message. In this case, the confirmation message includes channel information used for communication between the access point and the station, the channel information carries the offset information, and the channel information includes at least the first channel. The channel information includes the offset information, a channel bitmap, and an association identifier that is allocated by the access point to the station, and the channel bitmap indicates, according to bits, at least one channel used by the station to send data. That the confirmation message includes the channel information used for communication between the access point and the station may be specifically:
storing the association identifier in a third field that occupies two bytes and is in the confirmation message; storing the channel bitmap in a fourth field that occupies two bytes and is in the confirmation message; and storing the offset information in a fifth field that occupies two bytes and is in the confirmation message.

In the foregoing embodiment, a sending address field of the request message includes the first indication information or the second indication information.

Further, the request message further includes channel information requested by the station, and a quantity of channels in the channel information used for communication between the access point and the station is not greater than a quantity of channels in the channel information requested by the station. Specifically, a receiving address field of the request message may include the channel information requested by the station.

There are two kinds of request messages and confirmation messages in the foregoing embodiment:
In a first case, the request message is a request to send message (RTS frame), and the confirmation message is a clear to send message (CTS frame).
In a second case, the request message is a block acknowledgement request message, and the confirmation message is a block acknowledgement confirmation message.

The access point in this embodiment may be configured to execute the technical solution in the method embodiment shown in FIG. 1, and their implementation principles are similar, which are not described herein again. The processor 34 may control the transmitter 32 and the receiver 31 to perform corresponding operations.

According to the access point provided in this embodiment, a station indicates, in a request message, to the access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

FIG. 9 is a schematic structural diagram of Embodiment 2 of a station according to the present invention. As shown in FIG. 9, the station in this embodiment may include: a receiver 41, a transmitter 42, a memory 43, and a processor 44 (where there may be one or more processors 44, and one processor is used as an example in FIG. 9). In this embodiment of the present invention, the receiver 41, the transmitter 42, the memory 43, and the processor 44 may be connected by using a bus or in another manner. In FIG. 9, the receiver 41, that the transmitter 42, the memory 43, and the processor 44 are connected by using a bus is used as an example.

The memory 43 is configured to store program code, and the processor 44 is configured to invoke the program code stored in the memory 43 to perform the following step: generating, by the processor 44, a request message, where the request message includes first indication information used for indicating that the station is a first type station, and the first type station is a station supporting channel information indicated by an access point.

The transmitter 42 is configured to send, on a first channel, the request message to the access point, where the first channel is a minimum channel unit. The receiver 41 is configured to receive a confirmation message that is sent by the access point according to the request message, where the confirmation message includes channel information used for communication between the access point and the station, and the channel information includes at least the first channel. Further, that the receiver 41 receives the confirmation message that is sent by the access point according to the request message may be:
receiving, by the receiver 41, the confirmation message that is sent on a channel by the access point according to the request message, where the channel is included in the channel information.

The channel information includes a channel bitmap and an association identifier that is allocated by the access point to the station, and the channel bitmap indicates, according to bits, at least one channel used by the station to send data. That the confirmation message includes the channel information used for communication between the access point and the station may be specifically:
storing the association identifier in a first field that occupies two bytes and is in the confirmation message, and storing the channel bitmap in a second field that occupies four bytes and is in the confirmation message.

Based on the embodiment shown in FIG. 9, the request message may also be second indication information used for indicating that the station is a second type station, where the second type station supports channel information indicated by the access point and the channel information carries offset information, and the offset information is used for indicating a time that the station needs to wait after receiving a confirmation message. In this case, the confirmation message includes channel information used for communication between the access point and the station, the channel information carries the offset information, and the channel information includes at least the first channel. The channel information includes the offset information, a channel bitmap, and an association identifier that is allocated by the access point to the station, and the channel bitmap indicates, according to bits, at least one channel used by the station to send data. That the confirmation message includes the channel information used for communication between the access point and the station may be specifically:
storing the association identifier in a third field that occupies two bytes and is in the confirmation message; storing the channel bitmap in a fourth field that occupies two bytes and is in the confirmation message; and storing the offset information in a fifth field that occupies two bytes and is in the confirmation message.

In the foregoing embodiment, a sending address field of the request message includes the first indication information or the second indication information.

Further, the request message further includes channel information requested by the station, and a quantity of channels in the channel information used for communication between the access point and the station is not greater than a quantity of channels in the channel information requested by the station. Specifically, a receiving address field of the request message may include the channel information requested by the station.

There are two kinds of request messages and confirmation messages in the foregoing embodiment:
In a first case, the request message is a request to send message (RTS frame), and the confirmation message is a clear to send message (CTS frame).
In a second case, the request message is a block acknowledgement request message, and the confirmation message is a block acknowledgement confirmation message.

The station in this embodiment may be configured to execute the technical solution in the method embodiment shown in FIG. 4, and their implementation principles are similar, which are not described herein again. The processor 44 may control the transmitter 42 and the receiver 41 to perform corresponding operations.

According to the station provided in this embodiment, the station indicates, in a request message, to an access point that the station that sends the request message is a station supporting channel information indicated by the access point, or may indicate a station in another type. Therefore, after the access point allocates a channel resource to all stations in a centralized manner according to the channel resource and types of the stations in a same BSS, the access point may send a confirmation message to a station, where the confirmation message includes channel information used for communication between the access point and the station, thereby improving channel utilization and resource scheduling flexibility; in addition, an existing device can still work in a BSS normally because lengths of a request message and a confirmation message keep unchanged.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The foregoing integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The foregoing software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing functional modules is merely used as an example for illustration. In an actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

It should be noted that in this specification, relational terms such as "first" and "second" are only used to distinguish one entity or operation from another, and do not necessarily require or imply that any actual relationship or sequence exists between these entities or operations.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof; however, these modifications or replacements do not make the essence of corresponding technical solutions depart from the scope of the technical solutions in the embodiments of the present invention.

## Claims

1. A method for indicating a channel resource, comprising:
receiving (S101), on a first channel by an access point, a request message sent by a station, wherein the request message comprises indication information used for indicating that the station is a supporting type station, the supporting type station is a station supporting channel information indicated by the access point, and the first channel is a minimum channel unit; and
sending (S102), by the access point, a confirmation message to the station according to the request message, wherein the confirmation message comprises channel information used for communication between the access point and the station, and the channel information comprises at least the first channel;
wherein the channel information comprises a channel bitmap and an association identifier that is allocated by the access point to the station, and the channel bitmap indicates, according to bits, at least one channel used by the station to send data, **characterised in that**:
the request message is a request to send message, and the confirmation message is a clear to send message; or the request message is a block acknowledgement request message, and the confirmation message is a block acknowledgement confirmation message;
**in that** an original receiving address, RA, field of six bytes in the confirmation message is divided into two parts: an association identifier, AID, field of two bytes and a channel bitmap field of four bytes, or the original RA field of six bytes in the confirmation message is divided into three parts: an AID field of two bytes, an offset field of two bytes, and a channel bitmap field of two bytes; and
wherein that the confirmation message comprises the channel information used for communication between the access point and the station is specifically:
storing the association identifier in the AID field in the confirmation message, and storing the channel bitmap in the channel bitmap field in the confirmation message.

2. The method according to claim 1, wherein the request message further comprises channel information requested by the station, and a quantity of channels in the channel information used for communication between the access point and the station is not greater than a quantity of channels in the channel information requested by the station.

3. The method according to any one of claims 1 to 2, wherein
the request message is a block acknowledgement request message including indication information used for indicating that the access point receiving the block acknowledgement request message does not need to immediately reply to a block acknowledgement; and the method further includes:
sending, by the access point, the block acknowledgement confirmation message to the station that sent the block acknowledgement request message, where the block acknowledgement confirmation message includes at least one used transmit channel and a time at which a block acknowledgement message to be sent by the access point sending the block acknowledgement confirmation message arrives.

4. A method for indicating a channel resource, comprising:
sending (S201), on a first channel by a station, a request message to an access point, wherein the request message comprises indication information used for indicating that the station is a supporting type station, the supporting type station is a station supporting channel information indicated by the access point, and the first channel is a minimum channel unit; and
receiving (S202), by the station, a confirmation message that is sent by the access point according to the request message, wherein the confirmation message comprises channel information used for communication between the access point and the station, and the channel information comprises at least the first channel, wherein the channel information comprises a channel bitmap and an association identifier that is allocated by the access point to the station, and the channel bitmap indicates, according to bits, at least one channel used by the station to send data, **characterised in that**:
the request message is a request to send message, and the confirmation message is a clear to send message; or the request message is a block acknowledgement request message, and the confirmation message is a block acknowledgement confirmation message;
**in that** an original receiving address, RA, field of six bytes in the confirmation message is divided into two parts: an association identifier, AID, field of two bytes and a channel bitmap field of four bytes, or the original RA field of six bytes in the confirmation message is divided into three parts: an AID field of two bytes, an offset field of two bytes, and a channel bitmap field of two bytes; and wherein the association identifier is stored in the AID field in the confirmation message, and the channel bitmap is stored in the channel bitmap field in the confirmation message.

5. An access point, comprising:
a receiving module (11), configured to receive, on a first channel, a request message sent by a station, wherein the request message comprises indication information used for indicating that the station is a supporting type station, the supporting type station is a station supporting channel information indicated by the access point, and the first channel is a minimum channel unit; and
a sending module (12), configured to send a confirmation message to the station according to the request message, wherein the confirmation message comprises channel information used for communication between the access point and the station, and the channel information comprises at least the first channel,
wherein the channel information comprises a channel bitmap and an association identifier that is allocated by the access point to the station, and the channel bitmap indicates, according to bits, at least one channel used by the station to send data, **characterised in that**:
the request message is a request to send message, and the confirmation message is a clear to send message; or the request message is a block acknowledgement request message, and the confirmation message is a block acknowledgement confirmation message; **in that** an original receiving address, RA, field of six bytes in the confirmation message is divided into two parts: an association identifier, AID, field of two bytes and a channel bitmap field of four bytes, or the original RA field of six bytes in the confirmation message is divided into three parts: an AID field of two bytes, an offset field of two bytes, and a channel bitmap field of two bytes; and wherein the association identifier is stored in the AID field in the confirmation message, and the channel bitmap is stored in the channel bitmap field in the confirmation message.

6. A station, comprising:
a sending module (21), configured to send, on a first channel, a request message to an access point, wherein the request message comprises indication information used for indicating that the station is a supporting type station, the supporting type station is a station supporting channel information indicated by the access point, and the first channel is a minimum channel unit; and
a receiving module (22), configured to receive a confirmation message that is sent by the access point according to the request message, wherein the confirmation message comprises channel information used for communication between the access point and the station, and the channel information comprises at least the first channel,
wherein the channel information comprises a channel bitmap and an association identifier that is allocated by the access point to the station, and the channel bitmap indicates, according to bits, at least one channel used by the station to send data, **characterised in that**:
the request message is a request to send message, and the confirmation message is a clear to send message; or the request message is a block acknowledgement request message, and the confirmation message is a block acknowledgement confirmation message; **in that**
an original receiving address, RA, field of six bytes in the confirmation message is divided into two parts: an association identifier, AID, field of two bytes and a channel bitmap field of four bytes, or the original RA field of six bytes in the confirmation message is divided into three parts: an AID field of two bytes, an offset field of two bytes, and a channel bitmap field of two bytes; and wherein the association identifier is stored in the AID field in the confirmation message, and the channel bitmap is stored in the channel bitmap field in the confirmation message.

## Patentansprüche

1. Verfahren zum Angeben einer Kanalressource, das Folgendes umfasst:
Empfangen (S101) einer durch eine Station gesendeten Anforderungsmeldung auf einem ersten Kanal durch einen Zugangspunkt, wobei die Anforderungsmeldung Angabe-Informationen, die dazu genutzt werden, um anzugeben, dass die Station eine Station von einem unterstützenden Typ ist, umfasst, die Station von einem unterstützenden Typ eine Station, die vom Zugangspunkt angegebene Kanalinformationen unterstützt, ist und der erste Kanal eine Minimumkanaleinheit ist; und
Senden (S102) einer Bestätigungsmeldung durch den Zugangspunkt an die Station gemäß der Anforderungsmeldung, wobei die Bestätigungsmeldung Kanalinformationen, die für die Kommunikation zwischen dem Zugangspunkt und der Station genutzt werden, umfasst und die Kanalinformationen mindestens den ersten Kanal umfassen;
wobei die Kanalinformationen ein Kanalbitmuster und eine Assoziierungskennung, die der Station vom Zugangspunkt zugewiesen wird, umfassen und das Kanalbitmuster gemäß Bits mindestens einen Kanal, der von der Station zum Senden von Daten genutzt wird, angibt,
**dadurch gekennzeichnet, dass**:
die Anforderungsmeldung eine "Request-To-Send"-Meldung ist und die Bestätigungsmeldung eine "Clear-To-Send"-Meldung ist; oder die Anforderungsmeldung eine "Block-Acknowledgement"-Anforderungsmeldung ist und die Bestätigungsmeldung eine "Block-Acknowledgement"-Bestätigungsmeldung ist;
ein ursprüngliches "Receiving-Address"-Feld, RA-Feld, aus sechs Bytes in der Bestätigungsmeldung in zwei Teile unterteilt ist: ein "Association-Identifier"-Feld, AID-Feld, aus zwei Bytes und ein "Channel-Bitmap"-Feld aus vier Bytes, oder das ursprüngliche RA-Feld aus sechs Bytes in der Bestätigungsmeldung in drei Teile unterteilt ist: ein AID-Feld aus zwei Bytes, ein "Offset"-Feld aus zwei Bytes und ein "Channel-Bitmap"-Feld aus zwei Bytes; und
wobei dass die Bestätigungsmeldung die Kanalinformationen, die für die Kommunikation zwischen dem Zugangspunkt und der Station genutzt werden, umfasst speziell Folgendes ist:
Speichern der Assoziierungskennung im AID-Feld in der Bestätigungsmeldung und Speichern des Kanalbitmusters im "Channel-Bitmap"-Feld in der Bestätigungsmeldung.

2. Verfahren nach Anspruch 1, wobei die Anforderungsmeldung ferner durch die Station angeforderte Kanalinformationen umfasst und eine Anzahl von Kanälen in den Kanalinformationen, die für die Kommunikation zwischen dem Zugangspunkt und der Station genutzt werden, nicht größer ist als eine Anzahl von Kanälen in den Kanalinformationen, die durch die Station angefordert werden.

3. Verfahren nach einem der Ansprüche 1 bis 2, wobei
die Anforderungsmeldung eine "Block-Acknowledgement"-Anforderungsmeldung ist, die Angabe-Informationen, die dazu genutzt werden, um anzugeben, dass der Zugangspunkt, der die "Block-Acknowledgement"-Anforderungsmeldung empfängt, nicht sofort auf ein "Block Acknowledgement" antworten muss, enthält; und das Verfahren ferner Folgendes enthält:
Senden der "Block-Acknowledgement"-Bestätigungsmeldung durch den Zugangspunkt an die Station, die die "Block-Acknowledgement"-Anforderungsmeldung gesendet hat, wobei die "Block-Acknowledgement"-Bestätigungsmeldung mindestens einen genutzten Sendekanal und eine Zeit, zu der eine "Block-Acknowledgement"-Meldung, die durch den die "Block-Acknowledgement"-Bestätigungsmeldung sendenden Zugangspunkt zu senden ist, ankommt, enthält.

4. Verfahren zum Angeben einer Kanalressource, das Folgendes umfasst:
Senden (S201) einer Anforderungsmeldung auf einem ersten Kanal durch eine Station an einen Zugangspunkt, wobei die Anforderungsmeldung Angabe-Informationen, die dazu genutzt werden, um anzugeben, dass die Station eine Station von einem unterstützenden Typ ist, umfasst, die Station von einem unterstützenden Typ eine Station, die vom Zugangspunkt angegebene Kanalinformationen unterstützt, ist und der erste Kanal eine Minimumkanaleinheit ist; und
Empfangen (S202) einer Bestätigungsmeldung, die durch den Zugangspunkt gemäß der Anforderungsmeldung gesendet wird, durch die Station, wobei die Bestätigungsmeldung Kanalinformationen, die für die Kommunikation zwischen dem Zugangspunkt und der Station genutzt werden, umfasst und die Kanalinformationen mindestens den ersten Kanal umfassen, wobei die Kanalinformationen ein Kanalbitmuster und eine Assoziierungskennung, die der Station vom Zugangspunkt zugewiesen wird, umfassen und das Kanalbitmuster gemäß Bits mindestens einen Kanal, der von der Station zum Senden von Daten genutzt wird, angibt,
**dadurch gekennzeichnet, dass**:
die Anforderungsmeldung eine "Request-To-Send"-Meldung ist und die Bestätigungsmeldung eine "Clear-To-Send"-Meldung ist; oder die Anforderungsmeldung eine "Block-Acknowledgement"-Anforderungsmeldung ist und die Bestätigungsmeldung eine "Block-Acknowledgement"-Bestätigungsmeldung ist;
ein ursprüngliches "Receiving-Address"-Feld, RA-Feld, aus sechs Bytes in der Bestätigungsmeldung in zwei Teile unterteilt ist: ein "Association-Identifier"-Feld, AID-Feld, aus zwei Bytes und ein "Channel-Bitmap"-Feld aus vier Bytes, oder das ursprüngliche RA-Feld aus sechs Bytes in der Bestätigungsmeldung in drei Teile unterteilt ist: ein AID-Feld aus zwei Bytes, ein "Offset"-Feld aus zwei Bytes und ein "Channel-Bitmap"-Feld aus zwei Bytes; und wobei die Assoziierungskennung im AID-Feld in der Bestätigungsmeldung gespeichert wird und das Kanalbitmuster im "Channel-Bitmap"-Feld in der Bestätigungsmeldung gespeichert wird.

5. Zugangspunkt, der Folgendes umfasst:
ein Empfangsmodul (11), das konfiguriert ist, um eine durch eine Station gesendete Anforderungsmeldung auf einem ersten Kanal zu empfangen, wobei die Anforderungsmeldung Angabe-Informationen, die dazu genutzt werden, um anzugeben, dass die Station eine Station von einem unterstützenden Typ ist, umfasst, die Station von einem unterstützenden Typ eine Station, die vom Zugangspunkt angegebene Kanalinformationen unterstützt, ist und der erste Kanal eine Minimumkanaleinheit ist; und
ein Sendemodul (12), das konfiguriert ist, um eine Bestätigungsmeldung an die Station gemäß der Anforderungsmeldung zu senden, wobei die Bestätigungsmeldung Kanalinformationen, die für die Kommunikation zwischen dem Zugangspunkt und der Station genutzt werden, umfasst und die Kanalinformationen mindestens den ersten Kanal umfassen,
wobei die Kanalinformationen ein Kanalbitmuster und eine Assoziierungskennung, die der Station vom Zugangspunkt zugewiesen wird, umfassen und das Kanalbitmuster gemäß Bits mindestens einen Kanal, der von der Station zum Senden von Daten genutzt wird, angibt,
**dadurch gekennzeichnet, dass**:
die Anforderungsmeldung eine "Request-To-Send"-Meldung ist und die Bestätigungsmeldung eine "Clear-To-Send"-Meldung ist; oder die Anforderungsmeldung eine "Block-Acknowledgement"-Anforderungsmeldung ist und die Bestätigungsmeldung eine "Block-Acknowledgement"-Bestätigungsmeldung ist;
ein ursprüngliches "Receiving-Address"-Feld, RA-Feld, aus sechs Bytes in der Bestätigungsmeldung in zwei Teile unterteilt ist: ein "Association-Identifier"-Feld, AID-Feld, aus zwei Bytes und ein "Channel-Bitmap"-Feld aus vier Bytes, oder das ursprüngliche RA-Feld aus sechs Bytes in der Bestätigungsmeldung in drei Teile unterteilt ist: ein AID-Feld aus zwei Bytes, ein "Offset"-Feld aus zwei Bytes und ein "Channel-Bitmap"-Feld aus zwei Bytes; und wobei die Assoziierungskennung im AID-Feld in der Bestätigungsmeldung gespeichert wird und das Kanalbitmuster im "Channel-Bitmap"-Feld in der Bestätigungsmeldung gespeichert wird.

6. Station, die Folgendes umfasst:
ein Sendemodul (21), das konfiguriert ist, um eine Anforderungsmeldung auf einem ersten Kanal an einen Zugangspunkt zu senden, wobei die Anforderungsmeldung Angabe-Informationen, die dazu genutzt werden, um anzugeben, dass die Station eine Station von einem unterstützenden Typ ist, umfasst, die Station von einem unterstützenden Typ eine Station, die vom Zugangspunkt angegebene Kanalinformationen unterstützt, ist und der erste Kanal eine Minimumkanaleinheit ist; und
ein Empfangsmodul (22), das konfiguriert ist, um eine Bestätigungsmeldung, die durch den Zugangspunkt gemäß der Anforderungsmeldung gesendet wird, zu empfangen, wobei die Bestätigungsmeldung Kanalinformationen, die für die Kommunikation zwischen dem Zugangspunkt und der Station genutzt werden, umfasst und die Kanalinformationen mindestens den ersten Kanal umfassen,
wobei die Kanalinformationen ein Kanalbitmuster und eine Assoziierungskennung, die der Station vom Zugangspunkt zugewiesen wird, umfassen und das Kanalbitmuster gemäß Bits mindestens einen Kanal, der von der Station zum Senden von Daten genutzt wird, angibt,
**dadurch gekennzeichnet, dass**:
die Anforderungsmeldung eine "Request-To-Send"-Meldung ist und die Bestätigungsmeldung eine "Clear-To-Send"-Meldung ist; oder die Anforderungsmeldung eine "Block-Acknowledgement"-Anforderungsmeldung ist und die Bestätigungsmeldung eine "Block-Acknowledgement"-Bestätigungsmeldung ist;
ein ursprüngliches "Receiving-Address"-Feld, RA-Feld, aus sechs Bytes in der Bestätigungsmeldung in zwei Teile unterteilt ist: ein "Association-Identifier"-Feld, AID-Feld, aus zwei Bytes und ein "Channel-Bitmap"-Feld aus vier Bytes, oder das ursprüngliche RA-Feld aus sechs Bytes in der Bestätigungsmeldung in drei Teile unterteilt ist: ein AID-Feld aus zwei Bytes, ein "Offset"-Feld aus zwei Bytes und ein "Channel-Bitmap"-Feld aus zwei Bytes; und wobei die Assoziierungskennung im AID-Feld in der Bestätigungsmeldung gespeichert wird und das Kanalbitmuster im "Channel-Bitmap"-Feld in der Bestätigungsmeldung gespeichert wird.

## Revendications

1. Procédé d'indication d'une ressource de canal, consistant à :
recevoir (S101), sur un premier canal par un point d'accès, un message de demande envoyé par une station, le message de demande comprenant une information d'indication utilisée pour indiquer que la station est une station de type de prise en charge, la station de type de prise en charge étant une station prenant en charge une information de canal indiquée par le point d'accès, et le premier canal étant une unité de canal minimale ; et
envoyer (S102), par le point d'accès, un message de confirmation à la station selon le message de demande, le message de confirmation comprenant une information de canal utilisée pour une communication entre le point d'accès et la station, et l'information de canal comprenant au moins le premier canal ;
l'information de canal comprenant un topogramme binaire de canal et un identifiant d'association qui est affecté par le point d'accès à la station, et le topogramme binaire de canal indiquant, selon des bits, au moins un canal utilisé par la station pour envoyer des données,
le procédé étant **caractérisé en ce que** :
le message de demande est un message de demande d'envoi, et le message de confirmation est un message de voie libre ; ou le message de demande est un message de demande d'accusé de réception de bloc, et le message de confirmation est un message de confirmation d'accusé de réception de bloc ;
**en ce que** :
un champ d'adresse de réception (RA) d'origine de six octets dans le message de confirmation est divisé en deux parties : un champ d'identifiant d'association (AID) de deux octets et un champ de topogramme binaire de canal de quatre bits, ou le champ RA d'origine de six octets dans le message de confirmation est divisé en trois parties :
un champ AID de deux octets, un champ de décalage de deux octets et un champ de topogramme binaire de canal de deux octets ; et
le fait que le message de confirmation comprenne l'information de canal utilisée pour une communication entre le point d'accès et la station consistant spécifiquement à :
stocker l'identifiant d'association dans le champ AID dans le message de confirmation, et stocker le topogramme binaire de canal dans le champ de topogramme binaire de canal dans le message de confirmation.

2. Procédé selon la revendication 1, dans lequel le message de demande comprend en outre une information de canal demandée par la station, et dans lequel un nombre de canaux dans l'information de canal utilisée pour une communication entre le point d'accès et la station n'est pas supérieur à un nombre de canaux dans l'information de canal demandée par la station.

3. Procédé selon l'une quelconque des revendications 1 à 2, dans lequel :
le message de demande est un message de demande d'accusé de réception de bloc incluant une information d'indication utilisée pour indiquer que le point d'accès recevant le message de demande d'accusé de réception de bloc n'a pas besoin de répondre immédiatement à un accusé de réception de bloc ; et le procédé consistant en outre à :
envoyer, par le point d'accès, le message de confirmation d'accusé de réception de bloc à la station qui a envoyé le message de demande d'accusé de réception de bloc, le message de confirmation d'accusé de réception de bloc incluant au moins un canal d'émission utilisé et une heure d'arrivée d'un message d'accusé de réception de bloc que doit envoyer le point d'accès envoyant le message de confirmation d'accusé de réception de bloc.

4. Procédé d'indication d'une ressource de canal, consistant à :
envoyer (S201), sur un premier canal par une station, un message de demande à un point d'accès, le message de demande comprenant une information d'indication utilisée pour indiquer que la station est une station de type de prise en charge, la station de type de prise en charge étant une station prenant en charge une information de canal indiquée par le point d'accès, et le premier canal étant une unité de canal minimale ; et
recevoir (S 102), par la station, un message de confirmation envoyé par le point d'accès selon le message de demande, le message de confirmation comprenant une information de canal utilisée pour une communication entre le point d'accès et la station, et l'information de canal comprenant au moins le premier canal, l'information de canal comprenant un topogramme binaire de canal et un identifiant d'association qui est affecté par le point d'accès à la station, et le topogramme binaire de canal indiquant, selon des bits, au moins un canal utilisé par la station pour envoyer des données,
**caractérisé en ce que** :
le message de demande est un message de demande d'envoi, et le message de confirmation est un message de voie libre ; ou le message de demande est un message de demande d'accusé de réception de bloc, et le message de confirmation est un message de confirmation d'accusé de réception de bloc ;
**en ce que** :
un champ d'adresse de réception (RA) d'origine de six octets dans le message de confirmation est divisé en deux parties : un champ d'identifiant d'association (AID) de deux octets et un champ de topogramme binaire de canal de quatre bits, ou le champ RA d'origine de six octets dans le message de confirmation est divisé en trois parties :
un champ AID de deux octets, un champ de décalage de deux octets et un champ de topogramme binaire de canal de deux octets ; et l'identifiant d'association étant stocké dans le champ AID dans le message de confirmation, et le topogramme binaire de canal étant stocké dans le champ de topogramme binaire de canal dans le message de confirmation.

5. Point d'accès, comprenant :
un module de réception (11), configuré pour recevoir, sur un premier canal, un message de demande envoyé par une station, le message de demande comprenant une information d'indication utilisée pour indiquer que la station est une station de type de prise en charge, la station de type de prise en charge étant une station prenant en charge une information de canal indiquée par le point d'accès, et le premier canal étant une unité de canal minimale ; et
un module d'envoi (12), configuré pour envoyer un message de confirmation à la station selon le message de demande, le message de confirmation comprenant une information de canal utilisée pour une communication entre le point d'accès et la station, et l'information de canal comprenant au moins le premier canal,
l'information de canal comprenant un topogramme binaire de canal et un identifiant d'association qui est affecté par le point d'accès à la station, et le topogramme binaire de canal indiquant, selon des bits, au moins un canal utilisé par la station pour envoyer des données,
**caractérisé en ce que** :
le message de demande est un message de demande d'envoi, et le message de confirmation est un message de voie libre ; ou le message de demande est un message de demande d'accusé de réception de bloc, et le message de confirmation est un message de confirmation d'accusé de réception de bloc ;
**en ce que** :
un champ d'adresse de réception (RA) d'origine de six octets dans le message de confirmation est divisé en deux parties : un champ d'identifiant d'association (AID) de deux octets et un champ de topogramme binaire de canal de quatre bits, ou le champ RA d'origine de six octets dans le message de confirmation est divisé en trois parties :
un champ AID de deux octets, un champ de décalage de deux octets et un champ de topogramme binaire de canal de deux octets ; et l'identifiant d'association étant stocké dans le champ AID dans le message de confirmation, et le topogramme binaire de canal étant stocké dans le champ de topogramme binaire de canal dans le message de confirmation.

6. Station, comprenant :
un module d'envoi (21), configuré pour envoyer, sur un premier canal, un message de demande à un point d'accès, le message de demande comprenant une information d'indication utilisée pour indiquer que la station est une station de type de prise en charge, la station de type de prise en charge étant une station prenant en charge une information de canal indiquée par le point d'accès, et le premier canal étant une unité de canal minimale ; et
un module de réception (22), configuré pour recevoir un message de confirmation envoyé par le point d'accès selon le message de demande, le message de confirmation comprenant une information de canal utilisée pour une communication entre le point d'accès et la station, et l'information de canal comprenant au moins le premier canal, l'information de canal comprenant un topogramme binaire de canal et un identifiant d'association qui est affecté par le point d'accès à la station, et le topogramme binaire de canal indiquant, selon des bits, au moins un canal utilisé par la station pour envoyer des données,
**caractérisée en ce que** :
le message de demande est un message de demande d'envoi, et le message de confirmation est un message de voie libre ; ou le message de demande est un message de demande d'accusé de réception de bloc, et le message de confirmation est un message de confirmation d'accusé de réception de bloc ;
**en ce que** :
un champ d'adresse de réception (RA) d'origine de six octets dans le message de confirmation est divisé en deux parties : un champ d'identifiant d'association (AID) de deux octets et un champ de topogramme binaire de canal de quatre bits, ou le champ RA d'origine de six octets dans le message de confirmation est divisé en trois parties :
un champ AID de deux octets, un champ de décalage de deux octets et un champ de topogramme binaire de canal de deux octets ; et l'identifiant d'association étant stocké dans le champ AID dans le message de confirmation, et le topogramme binaire de canal étant stocké dans le champ de topogramme binaire de canal dans le message de confirmation.
